# DEMANDE DE BREVET EUROPEEN

(11) **EP 1 317 006 A2**
(43) Date de publication de la demande: **04.06.2003**
(21) Numéro de dépôt: 02292923.6
(22) Date de dépôt: 26.11.2002
(51) Int. Cl.: H01M 2/36, H01M 10/10

(54) **Dispositif de remplissage du bac d'une batterie au plomb par des composants destinés à former un électrolyte gélifié**

(30) Priorité: 28.11.2001 FR 0115397
(71) Demandeur: HAWKER SA, 62000 Arras (FR)
(72) Inventeur: Muneret, Xavier Jean-Marie René, 62123 Berneville (FR)
(74) Mandataire: Neyret, Daniel

(57) **Abrégé**

Dispositif de remplissage du bac (20) d'une batterie au plomb du type ouverte ou du type étanche à recombinaison de gaz par des composants destinés à former un électrolyte gélifié, caractérisé en ce qu'il comporte :
- au moins deux réservoirs (1, 2) renfermant lesdits composants, le premier réservoir (1) renfermant de l'acide sulfurique et le deuxième réservoir (2) renfermant un mélange d'eau et d'un gélifiant tel que des particules de silice ;
- au moins deux récipients (4, 5) connectés chacun à l'un desdits réservoirs (1, 2) et comportant chacun un piston (10, 11) pour expulser lesdits composants desdits récipients dans des conduites (17, 18) ;
- un mélangeur (16) dans lequel débouchent lesdites conduites (17, 18);
- et une conduite (19) reliant ledit mélangeur (16) et le bac (20) de ladite batterie à travers le couvercle (21) de ladite batterie.

## Description

L'invention concerne le domaine des batteries au plomb du type ouverte ou du type étanche à recombinaison de gaz. Plus précisément elle concerne le mode de préparation de l'électrolyte de ces batteries lorsqu'il se présente sous forme d'un gel, ainsi que le remplissage des batteries par cet électrolyte.

Les batteries d'accumulateur électrique au plomb, qu'elles soit du type « plomb ouvert » ou du type « à recombinaison de gaz » sont composées d'un faisceau de plaques positives et négatives reliées à une borne de polarité correspondante et supportant des matières actives (PbO₂ pour les plaques positives, Pb spongieux pour les plaques négatives). Ces plaques baignent dans un électrolyte dont l'élément fonctionnel est de l'acide sulfurique dilué. Cet électrolyte peut être à l'état liquide. Mais on peut aussi utiliser un électrolyte sous forme gélifiée. Ce gel est formé à partir d'un mélange d'eau, d'acide sulfurique et de particules de silice finement divisées. Ce mélange se transforme en gel après quelques dizaines de secondes ou quelques minutes passées au repos. Il est introduit dans le bac de la batterie après la mise en place des plaques, alors qu'il n'est pas encore à l'état gélifié. Les plaques peuvent avoir été préalablement « formées » (c'est à dire qu'on a conféré à leurs composants actifs la composition et la morphologie adéquates). A cet effet, on trempe les plaques dans un bain d'électrolyte liquide à base d'acide sulfurique où l'on fait passer un courant. Préférentiellement, lors de cette opération, les plaques sont installées dans le bac de la batterie, qui est vidé de l'électrolyte liquide après la formation des plaques. L'électrolyte destiné à former le gel est ensuite introduit dans le bac. Il est également possible de réaliser la formation des plaques directement avec l'électrolyte gélifié à l'intérieur du bac de la batterie.

Habituellement, la fabrication de l'électrolyte gélifié s'effectue par simple mélange de ses composants dans un récipient, où ils sont introduits successivement, après une mesure plus ou moins précise de leurs quantités. Cette méthode ne permet pas toujours une très bonne maîtrise des proportions relatives des différents composants, non plus qu'une maîtrise toujours satisfaisante de la quantité d'électrolyte introduite dans le bac, ce qui peut conduire à un sous-remplissage du bac ou, au contraire, à un remplissage excessif susceptible d'entraîner un débordement du gel.

Le but de l'invention est de proposer une méthode de préparation du gel et de remplissage des batteries exemptes des inconvénients précités.

A cet effet, l'invention a pour objet un dispositif de remplissage du bac d'une batterie au plomb du type ouverte ou du type étanche à recombinaison de gaz par des composants destinés à former un électrolyte gélifié, caractérisé en ce qu'il comporte
- au moins deux réservoirs renfermant lesdits composants, le premier réservoir renfermant de l'acide sulfurique et le deuxième réservoir renfermant un mélange d'eau et d'un gélifiant tel que des particules de silice ;
- au moins deux récipients connectés chacun à l'un desdits réservoirs et comportant chacun un piston pour expulser lesdits composants desdits récipients dans des conduites ;
- un mélangeur dans lequel débouchent lesdites conduites ;
- et une conduite reliant ledit mélangeur et le bac de ladite batterie à travers le couvercle de ladite batterie.

De préférence, lesdits pistons sont connectés à un dispositif unique commandant leur déplacement, ledit dispositif les faisant se déplacer simultanément et à la même vitesse.

Le dispositif comporte également de préférence des moyens pour établir une pression réduite à l'intérieur de la batterie.

De préférence, le mélangeur comporte un ou des éléments favorisant le mélange et/ou l'expulsion des différents composants qu'il reçoit, par exemple une succession de chicanes.

Le dispositif comporte de préférence des moyens automatiques de commande.

Comme on l'aura compris, l'invention repose sur le principe de l'utilisation, pour préparer le gel et le faire se retrouver dans le bac de la batterie, d'un mélangeur statique alimenté par deux réservoirs séparés contenant l'un l'acide sulfurique, l'autre le mélange eau/silice. Ces réservoirs comportent chacun un piston qui expulse le composant renfermé dans une conduite débouchant dans le mélangeur, où les composés sont introduits simultanément. Le mélangeur délivre de façon continue le mélange ainsi produit dans le bac de la batterie à remplir, où il va se transformer en gel.

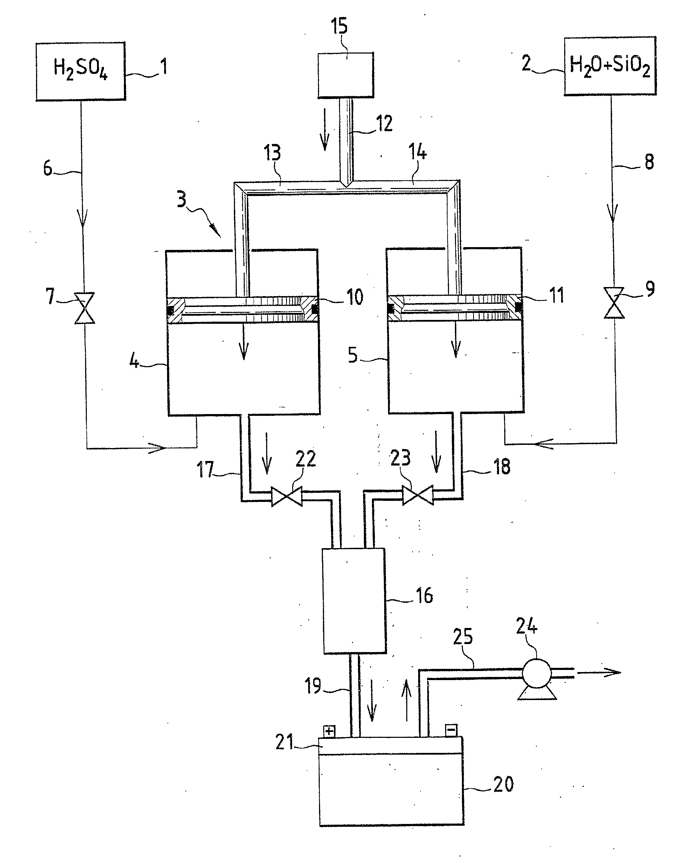

L'invention sera mieux comprise à la lecture de la description qui suit, donnée en référence à la figure unique annexée qui représente de manière schématique les principaux organes d'un exemple de dispositif de formation d'électrolyte gélifié et de remplissage d'une batterie au plomb acide selon l'invention.

L'installation comporte comme éléments essentiels :
- un premier réservoir 1 contenant de l'acide sulfurique ;
- un second réservoir 2 contenant un mélange d'eau et de particules de silice (ou de tout autre composé gélifiant utilisable à cet effet) ;
- un ensemble 3 formé par :
   * deux récipients 4, 5, dont le premier 4 est connecté par une conduite 6 au réservoir 1 d'acide sulfurique, une vanne 7 commandant l'admission de l'acide dans le récipient 4, et dont le second 5 est connecté par une conduite 8 au réservoir de mélange eau/silice 2, une vanne 9 commandant l'admission du mélange eau/silice dans le récipient 5 ;
   * et un système à double piston, dont le premier piston 10 obture le premier récipient 4 et le deuxième piston 11 obture le second récipient 5 ; ces deux pistons 10, 11, sont, dans l'exemple représenté, connectés l'un à l'autre de manière à se déplacer simultanément et à la même vitesse ; à cet effet, une tige 12 est divisée à l'une de ses extrémités en deux branches 13, 14 connectées chacune à l'un des pistons 10, 11, et l'autre extrémité de la tige 12 est connectée à un dispositif 15 commandant son déplacement ;
- un mélangeur 16 dans lequel les récipients 4, 5 envoient respectivement l'acide sulfurique et le mélange eau/silice par des conduites 17, 18 pour que s'y réalise le mélange des composants destinés à former le gel qui servira d'électrolyte à la batterie ;
- et une conduite 19 amenant lesdits composants mélangés depuis le mélangeur 16 jusqu'au bac 20 de la batterie, dans lequel ont été préalablement disposées les plaques positives et négatives ; à cet effet, la conduite 19 traverse le couvercle 21 du bac de la batterie ; des vannes 22, 23 disposées sur les conduites 17, 18 autorisent ou interdisent l'admission des divers liquides dans le mélangeur 16.

Lorsqu'on désire remplir une batterie avec de l'électrolyte, on réalise le montage de l'installation et sa connexion au couvercle 21 du bac 20 de la batterie, ainsi que le remplissage des récipients 4, 5 respectivement avec de l'acide sulfurique et du mélange eau/silice par ouverture des vannes 7, 9, les vannes 22, 23 étant fermées. Puis on ferme les vannes 7, 9 et on ouvre les vannes 22, 23 tout en commandant la progression des pistons 10, 11 au moyen du dispositif 15, de manière à expulser des récipients 4, 5 des quantités maîtrisées d'acide sulfurique et de mélange eau/silice. Comme les progressions des deux pistons 10, 11 sont simultanées et identiques en vitesse, les proportions respectives des différents composants pénétrant dans le mélangeur 16 sont déterminées une fois pour toutes et précisément par les rapports dimensionnels existant entre les deux récipients 4, 5. On garantit ainsi que les différents composants seront toujours mélangés dans les proportions adéquates. La conception d'ensemble de l'installation rend également possible une très bonne maîtrise de la quantité totale de composants ajoutée. On évite ainsi d'amener dans la batterie une quantité d'électrolyte excessive qui provoquerait un débordement, ou une quantité insuffisante qui dégraderait les performances de la batterie.

Les différents produits viennent donc au contact les uns des autres dans le mélangeur 16, et ils en sont expulsés là encore sous l'effet de la progression des pistons 10, 11. Cette expulsion peut éventuellement être assistée par un ensemble de chicanes ou d'obstacles divers disposés à l'intérieur du mélangeur 16, qui accentuent le brassage des composants et assurent l'homogénéité du mélange formant l'électrolyte. En tout état de cause, le temps de séjour des composants dans le mélangeur 16 doit être suffisant pour que leur mélange s'effectue correctement. Mais il doit aussi être suffisamment réduit pour que, au moment où le mélange formant l'électrolyte pénètre dans le bac 10 de la batterie, il se trouve toujours sous une forme franchement liquide et non encore gélifiée. Dans le cas contraire, le remplissage du bac 20 dans lequel se trouvent déjà les plaques de la batterie, ne s'effectuerait pas forcément de façon homogène. La gélification ne doit optimalement démarrer d'une manière franche que lorsque la batterie a été remplie, de façon à obtenir assurément un électrolyte gélifié totalement homogène et ayant un bon contact avec la totalité de la surface des plaques. Il est aisé de déterminer par le calcul et l'expérience les paramètres dimensionnels et opératoires de l'installation (tailles du mélangeur 16, des récipients 4, 5, vitesse de progression des pistons 10, 11, longueur des différentes conduites...) qui permettent de parvenir à ce résultat en fonction des différents paramètres particuliers à chaque installation : taille de la batterie, composition de l'électrolyte visée...

Optimalement, le remplissage du bac 20 de la batterie doit être effectué sous pression réduite. A cet effet une pompe 24 est connectée par une conduite 25 au couvercle 21, et fonctionne avant et pendant l'opération de remplissage. De cette façon, on évite la formation de poches d'air à l'intérieur de l'électrolyte gélifié, qui nuiraient à son bon contact avec les plaques.

On n'a jusqu'ici envisagé que le cas où on réalise le gel par le mélange de composants issus de deux réservoirs 1, 2. Mais il va de soi que si on voulait faire entrer de plus nombreux composants dans la composition du gel, il serait possible de prévoir davantage de réservoirs, de récipients et de pistons associés.

De même, tous autres appareils améliorant le fonctionnement et le pilotage de l'installation tels que des vannes supplémentaires, des débitmètres, des capteurs divers, des dispositifs de vidange du système, peuvent être ajoutés à ceux qui ont été décrits et représentés.

Le pilotage de l'installation peut être effectué entièrement par un opérateur humain, ou être effectué par des moyens de commande automatiques qui contrôlent en partie ou en totalité le dispositif 12, 15 commandant le déplacement des pistons 10, 11, les vannes 22, 23, la pompe 24, etc. en fonction d'informations telles que le niveau de liquide présent dans le bac 20.

En variante, on peut prévoir que les déplacements des deux pistons 10, 11 soient commandés de manière totalement indépendante, de sorte qu'il devient possible de faire varier les proportions des différents composants injectés dans le mélangeur 16, si on pense que cela peut, au moins occasionnellement, être requis.

Les pilotages relatifs des pistons 10, 11 devront alors être particulièrement soignés pour que les proportions visées soient bien obtenues.

L'invention est applicable aussi bien au cas où les plaques ont été formées avant le remplissage qu'au cas où les plaques sont formées après le remplissage.

## Revendications

1. Dispositif de remplissage du bac (20) d'une batterie au plomb du type ouverte ou du type étanche à recombinaison de gaz par des composants destinés à former un électrolyte gélifié, **caractérisé en ce qu'**il comporte :
- au moins deux réservoirs (1, 2) renfermant lesdits composants, le premier réservoir (1) renfermant de l'acide sulfurique et le deuxième réservoir (2) renfermant un mélange d'eau et d'un gélifiant tel que des particules de silice ;
- au moins deux récipients (4, 5) connectés chacun à l'un desdits réservoirs (1, 2) et comportant chacun un piston (10, 11) pour expulser lesdits composants desdits récipients dans des conduites (17, 18) ;
- un mélangeur (16) dans lequel débouchent lesdites conduites (17, 18);
- et une conduite (19) reliant ledit mélangeur (16) et le bac (20) de ladite batterie à travers le couvercle (21) de ladite batterie.

2. Dispositif selon la revendication 1, **caractérisé en ce que** lesdits pistons (10, 11) sont connectés à un dispositif (12, 15) unique commandant leur déplacement, ledit dispositif les faisant se déplacer simultanément et à la même vitesse.

3. Dispositif selon la revendication 1 ou 2, **caractérisé en ce qu'**il comporte également des moyens (24, 25) pour établir une pression réduite à l'intérieur de la batterie.

4. Dispositif selon l'une des revendications 1 à 3, **caractérisé en ce que** le mélangeur (16) comporte un ou des éléments favorisant le mélange et/ou l'expulsion des différents composants qu'il reçoit.

5. Dispositif selon la revendication 4, **caractérisé en ce que** ledit mélangeur (16) comporte une succession de chicanes.

6. Dispositif selon l'une des revendications 1 à 5, **caractérisé en ce qu'**il comporte des moyens automatiques de commande.

7. Dispositif selon l'une des revendications 1 à 6, **caractérisé en ce qu** 'il comporte des moyens de vidange.
